# EUROPEAN PATENT SPECIFICATION

(11) **EP 0 593 403 B1**
(45) Date of publication and mention of the grant of the patent: **29.10.1997**
(21) Application number: 93850132.7
(22) Date of filing: 15.06.1993
(51) Int. Cl.: B60G 21/073, B60G 17/08

(54) **Device relating to a shock absorber arrangement**
Vorrichtung zur Anwendung bei Stossdämpfern
Dispositif relatif à un arrangement pour l'amsortissement des chocs

(30) Priority: 15.10.1992 SE 9203031
(43) Date of publication of application: 20.04.1994
(73) Proprietor: ÖHLINS RACING AB, 194 27 Upplands Väsby (SE)
(72) Inventor: Danek, Magnus, S-116 34 Stockholm (SE)
(74) Representative: Karlsson, Berne

(56) References cited:
- EP-A- 0 079 189
- EP-A- 0 201 425
- WO-A-92/00203
- DE-A- 4 011 327
- FR-A- 2 057 130
- FR-A- 2 503 641
- FR-A- 2 677 306
- US-A- 2 985 444
- US-A- 5 193 845
- PATENT ABSTRACTS OF JAPAN vol. 15, no. 441 (M-1177)11 November 1991 & JP-A-03 186 413 (NISSAN MOTOR CO LTD) 14 August 1991

## Description

### TECHNICAL FIELD

The present invention relates to a device relating to a shock absorber arrangement according to the preamble of claim 1. By rolling motions are here meant rolling motions around the longitudinal axis of the vehicle and by pitching motions are meant motions around a transverse axis on the vehicle. The vehicle is spring-suspended and the shock absorber arrangement is integrated with or interacts with the spring-suspension system.

### PRIOR ART

It is previously well known to arrange a shock absorber arrangement in the present context. It is important, for example, to achieve good damping, preferably outstandingly good damping, for the said pitching motions in the vehicle. In an arrangement, at least, of reasonable technical complexity, the shock absorber arrangement is arranged such that the damping function from the shock absorbers with regard to the said pitching motions also influences the damping by the shock absorbers of the said rolling motions. In the event of heavily damped pitching motions, the vehicle has high roll stiffness against the said rolling motions due to the shock absorber arrangement in question. It is also important to be able to achieve an expedient damping of the said vertical motions, this too producing the said influence upon the sway stiffness in the vehicle. Increased relative sway stiffness on an axle gives rise to increased load on the outer wheel concerned.

EP-A-0 201 425 is referred to as being the closest prior art.

### DESCRIPTION OF THE INVENTION

### TECHNICAL PROBLEM

There is a need or desire, in different types of vehicle, e.g. Formula 1 racing cars, for the best possible characteristics to be able to be obtained in terms of the dynamic behaviour of the vehicle. Thus, cornering ability, for example, should be capable of being improved. This improvement should be able to be realised without a technically complex arrangement with reference to the spring-suspension and shock absorber functions.

The object of the invention is to solve these problems and to propose measures which, in a certain regard, run counter to previously proposed solutions. According to the invention, it is proposed, inter alia, that the dynamic roll stiffness should be reduced and hence the total load on the outer front wheel (temporarily) reduced when entering a bend.

The invention also has regard to improving characteristics of the vehicle when coming out of a bend, for example, or when accelerating, e.g. under acceleration when leaving a bend. Here too, the invention adopts the premise that the roll stiffness should be reduced and that the total load on the outer rear wheel in the particular travel phase should be reduced.

The above functional advantages produce better cornering ability of the vehicle. This improved cornering ability should be achievable without any effect upon an expected, good damping function with regard to the said pitching motions or vertical motions. The invention aims to solve this problem also.

It is important that the vehicle should be able to be constructed having the technically simplest possible shock absorber arrangement, thereby enabling complicated adjustment and servicing functions to be eliminated despite the said improved characteristics in the vehicle. The invention aims to provide a solution to this problem also.

### SOLUTION

What can primarily be considered to be characteristic of a device according to the invention is disclosed in the characterising part of claim 1. In one embodiment, the joint function is arranged such that the contribution of the respective shock absorber to the shock absorption varies, preferably linearly, in dependence upon the component of the said pitching motions and the said rolling motions in the respective shock-absorption instance (instant). In a preferred embodiment, the respective shock absorbers operate with a compression chamber located on the top side of the shock absorber and a valve or damping mechanism separate from the said chamber. Upon the pure pitching motions, the shock absorber medium in the shock absorber concerned can be conducted fully out via the respective valve or damping mechanism. In this way, the shock absorber pair or corresponding shock absorber assembly is able to achieve maximum damping capacity in respect of the said pitching motions. In the event of any rolling motions occurring in the first direction, a first shock absorber in the shock absorber pair or corresponding shock absorber assembly performs a compression motion and a second shock absorber in the shock absorber pair performs an expansion motion. The arrangement is in this case such that, upon the said rolling motions, medium can be transferred from the one shock absorber to the other, depending upon the direction of the rolling motion. The conveyance of medium from the one shock absorber to the other is also dependent upon the magnitude of the rolling motion. In the event of a lesser rolling motion a smaller quantity of medium and in the event of a greater rolling motion a larger quantity of medium or the entire quantity of medium is transferred, which medium is conducted out from the one shock absorber in question. The arrangement is therefore such that the medium tends to take the path to the other shock absorber rather than that via its associated valve or damping mechanism. A simultaneous pitching motion results in the chamber above the piston in the other shock absorber also being compressed, which compression is dependent upon the magnitude, etc. of the pitching motion.

In one embodiment, the interlinked shock absorbers are disposed beside a front pair of wheels forming part of the vehicle. In a further embodiment, the interlinked shock absorbers are disposed beside a rear wheel pair forming part of the vehicle. The interlinking of the joint function in the respective pair can herewith be executed by controllable mechanisms which are governed by the behaviour of the vehicle, by components in the vehicle, etc. As an example of the said components, the brake, throttle, etc. can be quoted.

In one embodiment, the chambers beneath the pistons in the shock absorbers concerned are also interlinked via one or more other connections.

In an alternative to the invention, the damping capacity in the respective shock absorbers in the respective joint-functioning shock absorber assembly is wholly or partially reduced in the event of rolling motions occurring in the vehicle. A negative shock absorber capacity can also be introduced, which influences or reinforces the rolling. The damping capacity varies, in this case, in dependence upon the magnitude of the swaying motion. The reduced damping capacity should herewith be related to the damping capacity in respect of pure pitching motions.

### ADVANTAGES

As a result of that which has been proposed above, the roll damping on a wheel pair on the vehicle is influenced or optimised, without the damping capacity for the pitching motions being thereby neglected. Likewise, an effective shock absorber function can be maintained against the said vertical motions. When the special features proposed by the invention are applied to the front wheels of a vehicle, the advantage is acquired that the vehicle is more readily able to corner and is easier to steer when entering a bend. By removing all or part of the dynamic roll stiffness in this travel phase for the vehicle, the load is removed from the outer wheel, thereby, in accordance with the above, contributing to the said readiness of cornering. As a result of the invention, it also becomes possible to apply the new function to shock absorbers in respect of the rear wheel pair of the vehicle. In this case, corresponding advantages are obtained when coming out of the said bend and when accelerating. The invention can also offer other advantages resulting from the establishment of the said connections between different shock absorbers. Thus, the oil current, for example, which occurs in a shock absorber when driving over projecting objects (stone or equivalent) in the roadway, is distributed to other shock absorbers, e.g. to two shock absorbers, thereby improving the characteristics. The trends in favour of natural vibration which are associated with the distribution of weight can thus be curbed in the face of an improved manner of driving.

The damping forces in utilised shock absorbers can therefore be adapted to different types of behaviour for different driving situations for the vehicle. The link-up for the achievement of the function can be made extremely simple. Thus, the link-up can be established, for example, by a hose connection or corresponding connection for the particular shock absorber medium. The connection between the chambers on the bottom sides of the pistons can also be realised extremely simply, e.g. by means of a hose connection of a type corresponding to that in the above case.

The damping constant relating to pitching motions can be made relatively high or reduced in relation to what is normal, or realised according to normal damping for the motions in question. The damping constants relating to rolling can form the basis for the choice of damping constants for swaying motions and pitching motions respectively.

### LIST OF FIGURES

A presently proposed embodiment of a device exhibiting the significant characteristics of the invention will be described below, reference simultaneously being made to the appended drawings, in which:
Figure 1 shows, in perspective and in elementary representation, motions occurring in a vehicle,
Figure 2 shows symbolically, in perspective, parts of a shock absorber arrangement incorporated into a vehicle,
Figure 3 shows, in diagrammatic representation, the joint function between the shock absorber arrangement according to Figure 2 and
Figure 4 shows, in perspective, a more constructive illustrative embodiment.

### DETAILED EMBODIMENT

A vehicle chassis is indicated by 1. The vehicle chassis is spring-suspended in a spring-suspension system of a type which is known per se. The vehicle is in principle spring-suspended, in respective corners, by means of springs 2, 3, 4 and 5 forming part of the spring-suspension system. In connection with the spring-suspension system, a shock absorber arrangement having shock absorbers 6, 7, 8, 9 is incorporated. The longitudinal axis of the vehicle is indicated by 10 and a transverse axis, extending at right-angles to the aforementioned axis, by 11. In addition, a vertical axis is indicated by 12. When travelling cross-country, the vehicle moves with rolling motions or rolling motions 13 around the axis 10, with pitching/tipping motions 14 around the axis 11 and with stamping or "heaving" motions 15 along the vertical axis 12. The said motions run in both directions.

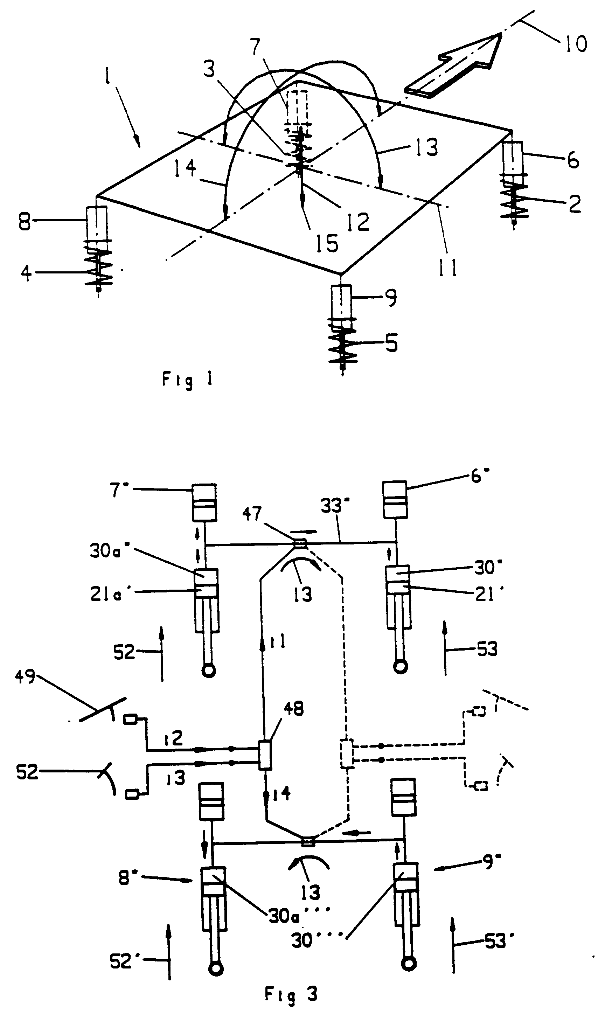

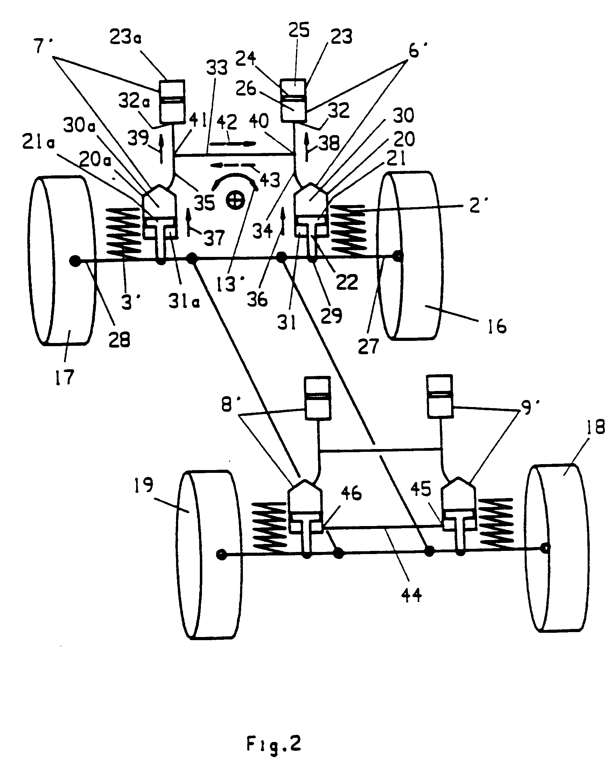

In Figure 2, shock absorbers corresponding to those in Figure 1 are indicated by 6', 7', 8' and 9'. According to the invention, shock absorbers in the shock absorber arrangement can be linked up. In one embodiment, the shock absorbers 6', 7' for the front wheel pair 16, 17 of the vehicle are interlinked or interlinkable. The shock absorbers 8', 9' for the rear wheel pair 18, 19 are correspondingly interlinked or interlinkable. Where the interlinking and the function for the shock absorbers for the respective wheels is arranged in a manner identical to that in the present case, then the function and construction will be described in greater detail for the wheel pairs 16, 17 only. The shock absorbers can be of a type which is already known per se, e.g. gas shock absorbers of the Öhlin Racing type. The respective shock absorbers comprise a cylinder 20 and a piston 21 having an associated piston rod 22. Additionally incorporated is an element 23, which is separate from the said shock absorber elements 20, 21 and 22 and has a floating piston 24, which piston separates a chamber 25 provided with gas from a chamber 26 operating with hydraulic oil. The respective wheels 16, 17 exhibit or are mounted on a wheel axle 27 and 28, at which there are disposed springs 2', 3' (cf. Figure 1) forming part of the spring-suspension system. The respective piston rod 22 in the respective shock absorber 6' is fixed in the respective wheel axle 27 via a fastening 29. The piston 21 operates inside the cylinder 20 in a medium, e.g. hydraulic oil, of a known type. A chamber on the top side of the piston 21 is indicated by 30 and a chamber on the bottom side of the piston is indicated by 31. The corresponding chambers in the shock absorber 7' are indicated by 30a and 30b. The said separate element 23 is provided with a valve or damping mechanism arrangement 32 of a type which is known per se. This means that the damping effected by the shock absorbers 20, 23 is realised in the said valve or damping mechanism arrangement 32 at least in the direction of compression.

According to the invention, the chambers 30 and 30a above the pistons in the shock absorbers 6' and 7' are connected to a connection 33. This connection can be constituted by a type which is known per se and comprises a hydraulic hose of a type which is known per se. The shock absorber elements 20 and 23 are connected via connections which are symbolised in the figure by 34 and 35 respectively.

In the event of pure pitching motions and in the event of the said stamping or rocking motions 15, the shock absorber pair 6', 7' interact and together bring about the damping of the said motions. Each shock absorber makes its contribution to the said damping and, in the case of the said pure pitching motions and vertical motions, the contributions are equal in size and are at a maximum in the present cases. In the case of such pure motions, the pistons 21 and 21a are forced simultaneously upwards and downwards and the medium currents generated upon the upward-travelling motion for the pistons relative to the cylinders 20 and 20a are indicated by continuous arrows 36 and 37. Medium is forced out from the chambers 30 and 30a to the element 23 or 23a. As regards the forces influencing the pistons 21 and 21a, all medium is transferred from the respective chamber 30, 30a to the elements 23 and 23a. This is indicated by the arrows 38, 39. No medium is conducted in this case in the connection 33, but the medium in question does pass the connection points 40, 41 belonging to the respective element 23, 23a and full damping is effected by the shock absorber arrangement in the valve or damping mechanism 32 or 32a, under the said compression motion.

In the event of a discrepancy in the reciprocal influencing forces between piston and cylinder in the respective shock absorbers 6' and 7', medium is guided via the connection points 40 and 41 into the connection 33. The said discrepancy occurs upon the onset of rolling motions 13 in the vehicle. Depending upon the direction in which the rolling occurs, a medium current 42, 43 is obtained in the connection. From the above-stated, it can be seen that medium is transferred from the chamber 30 to the chamber 30a or vice versa upon the introduction of the said rolling motion. In the event of a pure rolling motion (absence of pitching motion) in the vehicle, medium passes only between the chambers 30 and 30a and no medium passes via the valve and damping mechanism 32 and 32a. The contribution made by the respective shock absorber to the damping of the rolling motions is therefore less than the contribution made by the shock absorber through damping of the said pitching or tipping motions. It is also possible to connect the chambers 31 and 31a beneath the pistons 21 and 21a by means of a connection 44 of a type corresponding to the connection 33. The connection 44 can therefore also be constituted by a simple hose connection and the connection to the respective chamber 31, 31a can be realised by connections 45 and 46 which are known per se.

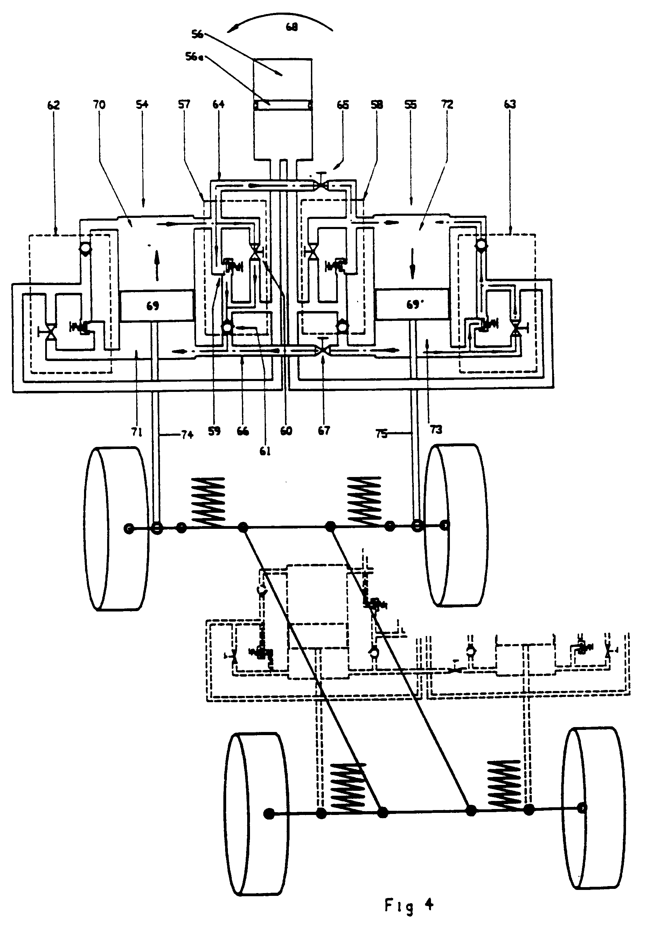

In Figure 3 it is shown that the connection or connections between the shock absorbers 6'' and 7'' in the respective shock absorber pair can be provided with coupling and decoupling mechanisms of a type which is known per se. The said decoupling mechanism is indicated by 47 and can be constituted by an opening and closing valve which is controlled by electrical signals i1. The control can be effected from a control unit 48 of a type which is known per se, which control unit receives information i2, i3 concerning the behaviour of the vehicle, actions of components in the vehicle, etc. As an example of the said components can be quoted a throttle 49, which is known per se and which, depending upon the actions of the driver, establishes the signals i2 to the unit 48. Another example of the said components is the brake 50, by means of which the driver can establish signals i3 to the said unit 48. Both shock absorber pairs 6'', 7'' and 8'', 9'' can be provided with the above-stated interlinking function. Only one shock absorber pair can be provided with the said coupling and decoupling function 47. Both shock absorber pairs can be provided with the coupling and decoupling function and in Figure 3 the decoupling function 8'', 9'' has been indicated by 51. The unit 48 herewith establishes signals i4 to the on-off function 51. The continuous lines for the control function indicate coordinated functioning between the shock absorber pairs in terms of their couplings and decouplings. The shock absorber pairs can be coupled and decoupled simultaneously or in different phases of the vehicle travel. Corresponding control functions, which are represented by dashed lines, indicate that the respective shock absorber pair can only be provided with the said control function if this functions correspondingly.

Figure 3 also shows the relative displacements between the pistons 21' and 21a' of the shock absorber pairs. In the case of the shock absorber pairs 6'', 7'', medium is transferred, in the case shown, from the chamber 30a'' to the chamber 30''. The rolling motion 13 runs in this case to the right in Figure 3. The opposite case is shown for the other shock absorber pair 8'', 9''. Medium is in this case transferred from the chamber 30''' to 30a'''. The pitching motion 13 runs in this case in the other direction. In the event of simultaneous pitching motions 52, 53 and 52', 53' on the pistons 21' and 21a', the said damping is established for the latter motions.

Figure 4 shows essentially the same kind of damping arrangement for the front and rear elements/axles of a vehicle. For the respective axle, there are arranged shock absorbers 54 and 55, forming part of a pair, which are connected to an assigned accumulator 56 having a floating piston 56a. The absorbers are assigned to compression valve systems 57 and 58, which respectively comprise a control valve function (control valve) 59, throttle valve function (bleeder) 60 and one-way valve function (clack valve) 61. The respective control valve function regulates a flow of liquid in the one direction and keeps the liquid flow in the other direction totally or substantially throttled. The absorbers are also assigned to the return valve system 62 or 63 having corresponding valve functions.

The respective absorber pair (e.g. 54, 55) is interlinkable, on the one hand on the compression side, by means of a connection 64, in which a valve, e.g. a throttle valve 65, is disposed, on the other hand on the return side, by means of a connection 66 incorporating a valve, e.g. a throttle valve. The valves 65, 66 and/or 59, 60 are manually or electronically adjustable according to the above.

In the event of a rolling motion, e.g. to the left (see 68), the piston 69 of the absorber 54 is forced upwards (in Figure 4) and the piston 69' of the absorber 55 forced downwards. The damping liquid is herewith displaced from the compression chamber 70 of the absorber 54, on the one hand through the compression valve system 57 to a chamber 71 beneath the piston 69 and on the other hand through the conduit 64 and the valve 65 to the compression chamber 72 of the absorber 55. In addition, liquid is displaced from the return chamber 73 of the absorber 55, on the one hand through the conduit 66 and the valve 67 to the chamber 71 beneath the piston 69 and on the other hand through the valve system 63 to the chamber 72 above the piston 69'. Arrows indicated in Figure 4 show the particular flow paths upon the motion 68.

The quantity of liquid which is conducted through the conduit 64 in relation to the quantity which is conducted through the system 57 is regulated by means of the valve 65 and the quantity which is conducted through the connection 66 in relation to the system 63 is regulated or adjusted by means of the valve 67. If the valves 65 and 67 are fully open, then no dynamic roll damping is obtained and if they are fully closed, then the maximum sway damping is obtained. In the event of pitching motions, the accumulator receives and returns liquid quantities corresponding to the piston rod volumes under compression and expansion motions. In the event of rolling motions, the respective piston rod volume is transferred from the displaced side/absorber to the other side/absorber.

## Claims

1. Device relating to a shock absorber arrangement (6, 7, 8, 9) for the shock absorption of rolling and pitching motions in a vehicle body, in which each wheel (16, 17) in a front and/or rear pair(s) of wheels (16, 17; 18, 19) is provided with a shock absorber and the shock absorbers in at least one of said pairs of wheels are incorporated in a joint function; each shock absorber of said joint functioning shock absorbers comprises a cylinder (20, 20a) and a piston (21, 21a; 69, 69') dividing said cylinder into upper and lower chambers (30, 31, 30a 31a; 70, 71, 72, 73) and a separate external valve or damping mechanism arrangement (23, 23a; 57, 58) hydraulically connected to said upper chamber; the upper chamber (30a, 70) of the left shock absorber being hydraulically connectable by means of a connection (33, 64) to the upper chamber of the right shock absorber such that during rolling motion of the vehicle body working medium is transferable between said upper chambers, characterised in that the valve or damping mechanism arrangements of the upper chambers of the joint functioning shock absorbers are adapted to cause during pure pitching motions of the vehicle body that the working medium of each shock absorber is conducted only (36, 38; 37, 39) between the upper chamber of each shock absorber and its valve and damping mechanism arrangement for providing a maximum joint absorption; and allow during the occurrence of said roll motions conduction of the working medium via said connection (33, 64) and thereby reducing the shock absorbing contribution of each of said shock absorbers compared with its contribution at said maximum joint absorption.

2. Device according to patent claim 1 characterised in that the apper chambers of the shock-absorbers alternately appearing as compression and expansion chambers (30, 30a) which are located on the top side of the piston in the respective shock absorber and are interconnected via said connection or more connections (33).

3. Device according to patent claims 1 or 2, characterised in that the interlinked shock absorbers are disposed beside a front wheel pair (16, 17) forming part of the vehicle, the roll stiffness of the vehicle being reduced, for example, when entering a bend, or in that the interlinked shock absorbers are disposed beside a rear wheel pair (18, 19) forming part of the vehicle, the roll stiffness of the vehicle being reduced, for example, when coming out of a bend or when accelerating.

4. Device according to patent claims 1, 2 or 3, characterised in that the joint-functioning between joint-functioning shock absorbers can be effected via one or more first mechanisms (47, 51), which can be controlled by means of the behaviour of the vehicle, by means of manoeuvring mechanisms incorporated in the vehicle, such as the brake (50), throttle (49), etc., and/or in that the second mechanism (48) is arranged to activate and deactivate, alternatively or in coordinated manner, the interlinking function in different, joint-functioning shock absorber pairs or to couple and decouple the interlinking function in the respective shock absorber pair.

5. Device according to any one of the preceding patent claims, characterised in that the chambers on the bottom sides (31, 31a) of the pistons in joint-functioning shock absorbers are interlinked via a second connection (44).

## Patentansprüche

1. Vorrichtung bezüglich einer Stoßdämpferanordnung (6, 7, 8, 9) zur Stoßdämpfung von Wälz- und Stampfbewegungen in einer Fahrzeugkarosserie, in der jedes Rad (16, 17) eines vorderen und/oder hinteren Raderpaars bzw. von vorderen und/oder hinteren Räderpaaren (16, 17, 18, 19) mit einem Stoßdämpfer versehen ist und die Stoßdämpfer zumindest eines Räderpaars gemeinsam funktionieren, jeder Stoßdämpfer der gemeinsam funktionierenden Stoßdämpfer einen Zylinder (20, 20a), einen Kolben (21, 21a, 69, 69'), der den Zylinder in obere und untere Kammern (30, 31, 30a, 31a, 70, 71, 72, 73) unterteilt, und eine separate Außenventil- bzw. Dämpfungsvorrichtungsanordnung (23, 23a, 57, 58), die hydraulisch mit der oberen Kammer verbunden ist, aufweist, wobei die obere Kammer (30a, 70) des linken Stoßdämpfers durch eine Verbindung (33, 64) hydraulisch mit der oberen Kammer des rechten Stoßdämpfers verbindbar ist, so daß bei Wälzbewegungen der Fahrzeugkarosserie Arbeitsmedium zwischen den oberen Kammern übertragbar ist, dadurch gekennzeichnet, daß die Ventil- bzw. Dämpfungsvorrichtungsanordnungen der oberen Kammern der gemeinsam funktionierenden Stoßdämpfer so eingerichtet sind, daß sie bei reinen Stampfbewegungen der Fahrzeugkarosserie die Übertragung des Arbeitsmediums jedes Stoßdämpfers nur (36, 38, 37, 39) zwischen der oberen Kammer jedes Stoßdämpfers und seiner Ventil- und Dämpfungsvorrichtungsanordnung bewirken, um die maximale gemeinsame Absorbierung zu erreichen, und beim Auftreten der Wälzbewegungen die Übertragung des Arbeitsmediums über die Verbindung (33, 64) gestatten, wodurch der stoßdämpfende Beitrag jedes Stoßdämpfers im Vergleich zu seinem Beitrag bei der maximalen gemeinsamen Absorbierung reduziert wird.

2. Vorrichtung nach Anspruch 1, dadurch gekennzeichnet, daß die oberen Kammern der Stoßdämpfer abwechselnd als Verdichtungs- und Ausdehnungskammern (30, 30a) fungieren, die sich auf der Oberseite des Kolbens im jeweiligen Stoßdämpfer befinden und über eine oder mehrere Verbindungen (33) miteinander verbunden sind.

3. Vorrichtung nach Anspruch 1 oder 2, dadurch gekennzeichnet, daß die miteinander verbundenen Stoßdämpfer neben einem vorderen Räderpaar (16, 17), das Teil des Fahrzeugs ist, angeordnet sind, wobei die Wälzsteife des Fahrzeugs reduziert wird, wenn es zum Beispiel in eine Kurve eintritt, oder die miteinander verbundenen Stoßdämpfer neben einem hinteren Räderpaar (18, 19), das Teil des Fahrzeugs ist, angeordnet sind, wobei die Wälzsteife des Fahrzeugs reduziert wird, wenn es zum Beispiel aus einer Kurve austritt oder wenn es beschleunigt.

4. Vorrichtung nach einem der Ansprüche 1 bis 3, dadurch gekennzeichnet, daß das gemeinsame Funktionieren der gemeinsam funktionierenden Stoßdämpfer über eine oder mehrere erste Vorrichtungen (47, 51) erreichbar ist, die mit Hilfe des Fahrzeugverhaltens und durch in das Fahrzeug eingebaute Manövriervorrichtungen, zum Beispiel die Bremse (50), die Drosselklappe (49) usw., steuerbar sind, und/oder die zweite Vorrichtung (48) so eingerichtet ist, daß sie alternativ oder koordiniert die miteinander verbindende Funktion in unterschiedlichen, gemeinsam funktionierenden Stoßdämpferpaaren aktiviert und deaktiviert oder die miteinander verbindende Funktion im jeweiligen Stoßdämpferpaar kuppelt und entkuppelt.

5. Vorrichtung nach einem der Ansprüche 1 bis 4, dadurch gekennzeichnet, daß die Kammern auf den Unterseiten (31, 31a) der Kolben in gemeinsam funktionierenden Stoßdämpfern über eine zweite Verbindung (44) miteinander verbunden sind.

## Revendications

1. Appareil associé à un ensemble d'amortisseurs de chocs (6, 7, 8, 9) destiné à l'absorption de chocs pendant les mouvements de roulis et de tangage dans un châssis de véhicule, dans lequel chaque roue (16, 17) d'une ou plusieurs paires de roues avant et/ou arrière (16, 17 ; 18, 19) a un amortisseur et les amortisseurs de l'une au moins des paires de roues ont un fonctionnement associé, chaque amortisseur des amortisseurs ayant un fonctionnement associé comporte un cylindre (20, 20a) et un piston (21, 21a ; 69, 69') qui divise le cylindre en chambres supérieure et inférieure (30, 31, 30a, 31a ; 70, 71, 72, 73) et un ensemble externe séparé à soupape ou mécanisme d'amortissement (23, 23a ; 57, 58) connecté hydrauliquement à la chambre supérieure, la chambre supérieure (30a, 70) de l'amortisseur gauche pouvant être raccordée hydrauliquement par une connexion (33, 64) à la chambre supérieure de l'amortisseur droit afin que, pendant le mouvement de roulis de la carrosserie du véhicule, un fluide de travail puisse être transféré entre les chambres supérieures, caractérisé en ce que les ensembles à soupape ou mécanisme d'amortissement des chambres supérieures des amortisseurs ayant un fonctionnement associé sont destinés à provoquer un mouvement tel que, pendant des mouvements de pur tangage de la carrosserie du véhicule, le fluide de travail de chaque amortisseur est conduit uniquement (36, 38 ; 37, 39) entre la chambre supérieure de chaque amortisseur et son ensemble à soupape et mécanisme d'amortissement pour une absorption associée maximale, et, pendant les mouvements de roulis, permet la conduction du fluide de travail par ladite connexion (33, 64) et ainsi la réduction de la contribution d'absorption des chocs des autres amortisseurs par rapport à la contribution à l'absorption associée maximale.

2. Appareil selon la revendication 1, caractérisé en ce que les chambres supérieures des amortisseurs apparaissent en alternance comme chambres de compression et de détente (30, 30a) qui sont placées à la face supérieure du piston dans l'amortisseur respectif et sont interconnectées par une ou plusieurs connexions (33).

3. Appareil selon la revendication 1 ou 2, caractérisé en ce que les amortisseurs reliés sont disposés à côté d'une paire de roues avant (16, 17) faisant partie du véhicule, la rigidité au roulis du véhicule étant réduite par exemple lors de l'entrée dans un virage, ou en ce que les amortisseurs reliés sont placés du côté d'une paire de roues arrière (18, 19) faisant partie du véhicule, la rigidité au roulis du véhicule étant réduite par exemple lors de la sortie d'un virage ou lors de l'accélération.

4. Appareil selon la revendication 1, 2 ou 3, caractérisé en ce que le fonctionnement associé des amortisseurs ayant un fonctionnement associé peut être réalisé à l'aide d'un ou plusieurs premiers mécanismes (47, 51) qui peuvent être commandés par le comportement du véhicule, à l'aide de mécanismes de manoeuvre incorporés au véhicule, tels qu'un frein (50), un papillon des gaz (49), etc. et/ou en ce que le second mécanisme (48) est destiné à activer et désactiver, en alternance ou de manière coordonnée, la fonction de liaison dans des paires différentes d'amortisseurs ayant un fonctionnement associé ou à coupler et désaccoupler la fonction de solidarisation de la paire respective d'amortisseurs.

5. Appareil selon l'une quelconque des revendications précédentes, caractérisé en ce que les chambres des côtés inférieurs (31, 31a) des pistons d'amortisseurs ayant un fonctionnement associé sont reliées par une seconde connexion (44).
